# EUROPEAN PATENT SPECIFICATION

(11) **EP 4 522 468 B1**
(45) Date of publication and mention of the grant of the patent: **10.12.2025**
(21) Application number: 23729170.3
(22) Date of filing: 10.05.2023
(51) Int. Cl.: B60T 11/232, B60T 11/236, F16J 15/3236

(54) **PRIMARY GASKET FOR A CYLINDER ASSEMBLY, CYLINDER ASSEMBLY**
PRIMÄRDICHTUNG FÜR EINE ZYLINDEREINHEIT, ZYLINDEREINHEIT
JOINT D'ÉTANCHÉITÉ PRIMAIRE POUR ENSEMBLE CYLINDRE, ENSEMBLE CYLINDRE

(30) Priority: 13.05.2022 IT 202200009953
(43) Date of publication of application: 19.03.2025
(73) Proprietor: Brembo S.p.A., 24035 Curno (Bergamo) (IT)
(72) Inventor: CARRARA, Marco, 24035 Curno, Bergamo (IT); MAZZEI, Luca, 24035 Curno, Bergamo (IT); SALA, Paolo, 24035 Curno, Bergamo (IT)
(74) Representative: Crippa, Paolo Ernesto
(86) International application number: PCT/IB2023/054822
(87) International publication number: WO 2023/218366

(56) References cited:
- CN-U- 202 280 839
- CN-Y- 201 015 990
- JP-A- 2010 014 201
- KR-A- 20070 062 258

## Description

### . Field of the invention

**.** The present invention relates to a primary gasket for a cylinder assembly, as well as to a cylinder assembly for a hydraulic and/or electrohydraulic system of a vehicle.

### . Background art

**.** In the field of cylinder assemblies for hydraulic and/or electrohydraulic systems in a vehicle, such as a brake master cylinders and/or brake actuators, it is known to arrange a sealingly movable float inside a hollow cylinder which defines an axial direction A-A, and a radial direction R-R perpendicular to the axial direction. For example, a solution is known form KR20070062258A**.**

**.** The float is axially movable in the hollow cylinder between a resting configuration and at least one advanced configuration to pressurize a fluid, e.g., a brake fluid, in a pressure chamber in the hollow cylinder.

**.** When the float is in a resting configuration, the pressure chamber is in fluid communication with a fluid reservoir by means of a supply conduit. When the float is in a resting configuration, the pressure in the pressure chamber is equal to the pressure of the reservoir. When the float advances axially toward the at least one advanced configuration, the pressure chamber and the reservoir are fluidically isolated, allowing the fluid in the pressure chamber to be pressurized.

**.** The float is axially movable by sliding tightly on a primary gasket and a secondary gasket which are accommodated in respective housings or grooves, a primary housing and a secondary housing, made in the wall of the hollow cylinder. The primary housing and the secondary housing are made in the wall of the hollow cylinder. The supply conduit leads radially from the hollow cylinder wall into a supply opening arranged between the primary housing and the secondary housing.

**.** The secondary gasket is adapted to form a static and dynamic seal between the cylinder and the float to avoid the fluid in the reservoir and/or pressure chamber, when in fluid communication with the reservoir, from flowing into the cylinder in the opposite direction to the pressure chamber. For example, the secondary gasket serves the function of hydraulically isolating the electromechanical components accommodated in the cylinder on the side opposite to the pressure chamber, and/or preventing leakages of hydraulic fluid from the pressure chamber.

**.** The primary gasket is adapted to keep the fluid pressurized in the pressure chamber, preventing fluid passages from the pressure chamber to the reservoir when the float is in an advanced position in the cylinder. In this case, the primary gasket is in a fluid isolation configuration, with a back portion thereof abutting against a first radial wall of primary housing.

**.** If the hydraulic system needs a further pressure increase, at least one valve which increases the pressure in the reservoir is opened in order to trigger a flow of fluid from the reservoir to the pressure chamber, avoiding the primary gasket from preventing such a fluid passage, thus increasing the pressure in the pressure chamber.

**.** In order to fulfill this function, the primary gasket is a three-lip gasket comprising an inner lip, a central lip, and an outer lip which project from the back portion to be radially and mutually spaced apart. The inner lip is configured to form a seal with the float. The outer lip is configured to form a seal with an outer wall of the primary housing when the pressure in the pressure chamber is higher than the pressure in the reservoir, thus fluidically isolating the pressure chamber and the reservoir. The outer lip is configured to bend toward the central lip moving away from the outer wall of the housing when the pressure in the reservoir is higher than the pressure in the pressure chamber, thus allowing a fluid communication between the reservoir and the pressure chamber. When the reservoir pressure exceeds the pressure chamber pressure, the primary gasket is configured to slide axially in the primary housing from the fluid isolation configuration to a fluid communication configuration, thus axially abutting with the central lip against a second radial wall of primary housing axially opposite to said first radial wall. Moreover, the central lip is configured to bend toward the inner lip, allowing the reservoir and the pressure chamber to be fluidically connected, thus allowing the pressure in the pressure chamber to be increased.

**.** Once the at least one valve is closed, the primary gasket is configured to slide axially to the fluid isolation configuration, abutting with the back portion against the first radial wall until it fluidically isolates the reservoir and the pressure chamber.

**.** It has been found in the industry that when the primary gasket is overstressed in the fluid communication configuration, the outer lip and the central lip can bend excessively leading to the rotation of the primary gasket in the primary housing, which can compromise the return of the primary gasket to the fluid isolation configuration, thus jeopardizing the proper operation of the cylinder assembly.

**.** Therefore, the need to stabilize the primary gasket when working in the fluid communication configuration is strongly felt in the industry, reducing the risk of unintended rotations of the primary gasket which can obstruct the passage of fluid from the reservoir to the pressure chamber and/or vice versa.

**.** Therefore, the need to obstruct the passage of fluid through the primary gasket as little as possible is strongly felt in the industry, avoiding as much as possible a bending of the central lip which could lead to rotation of the primary gasket.

### . Solution

**.** It is the object of the present invention to provide a primary gasket for a cylinder assembly which allows solving the complained problems of the prior art.

**.** This and other objects and advantages are achieved by a primary gasket according to claim **1** and cylinder assembly according to claim **9.**

**.** Some advantageous embodiments are the subject of the dependent claims.

**.** By virtue of the suggested solutions, a high fluid passage can be ensured through the central lip, reducing the resistance to fluid passage compared to the prior art.

**.** By virtue of the suggested solutions, a high fluid passage can be ensured, reducing the tendency of the central lip to bend, or even avoiding a bending of the central lip.

**.** By virtue of the suggested solutions, a seamless abutment of the central lip against the radial wall of the primary gasket housing can be ensured, while simultaneously ensuring low resistance to the passage of fluid on the one hand, and high bending resistance or structural strength of the central lip on the other hand, keeping the central lip stably abutting.

### . Figures

**.** Further features and advantages of the primary gasket and the cylinder assembly will become apparent from the following description of preferred embodiments thereof, given by way of nonlimiting indication, with reference to the accompanying drawings, in which:

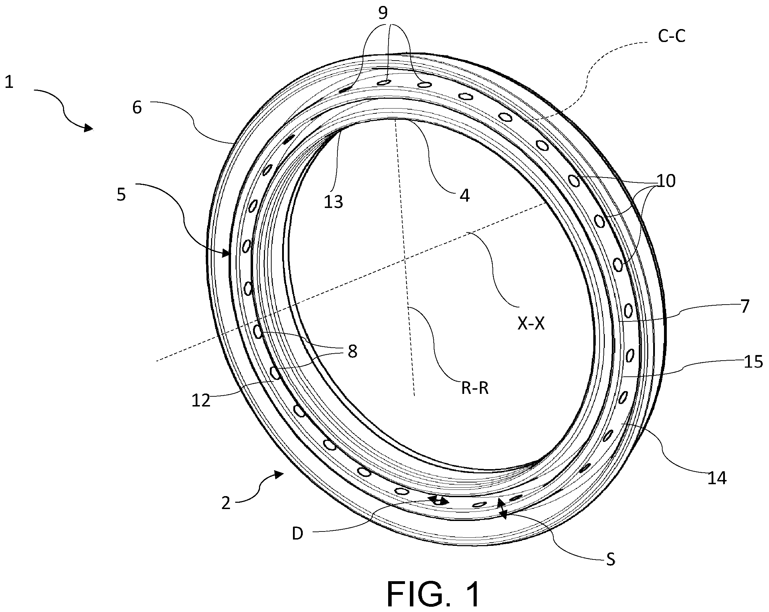

- figure 1 is an axonometric view of a primary gasket according to the present invention showing an annular gasket body having an inner lip, an outer lip, and a central lip projecting in an axial direction from a gasket back portion, where the central lip comprises a central lip edge, and at least one radial opening through the thickness of the central lip avoiding interference with the central lip edge;

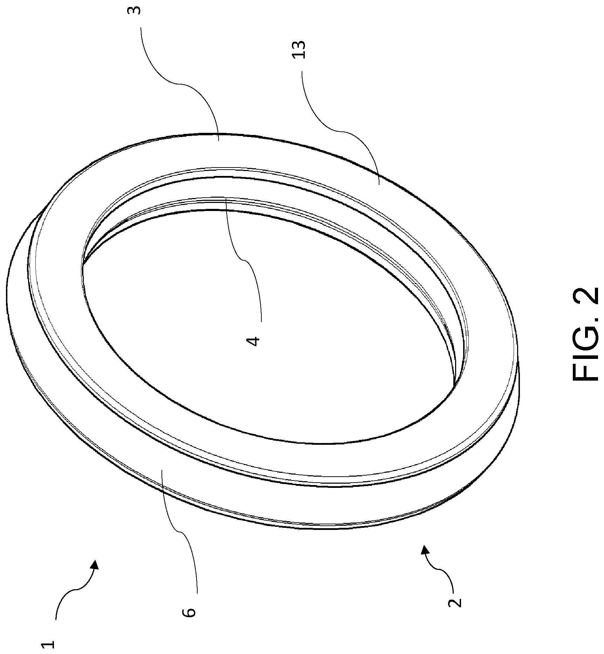

- figure 2 is an axonometric view of the primary gasket in figure 1 seen from an opposite direction, showing the back portion of the primary gasket;

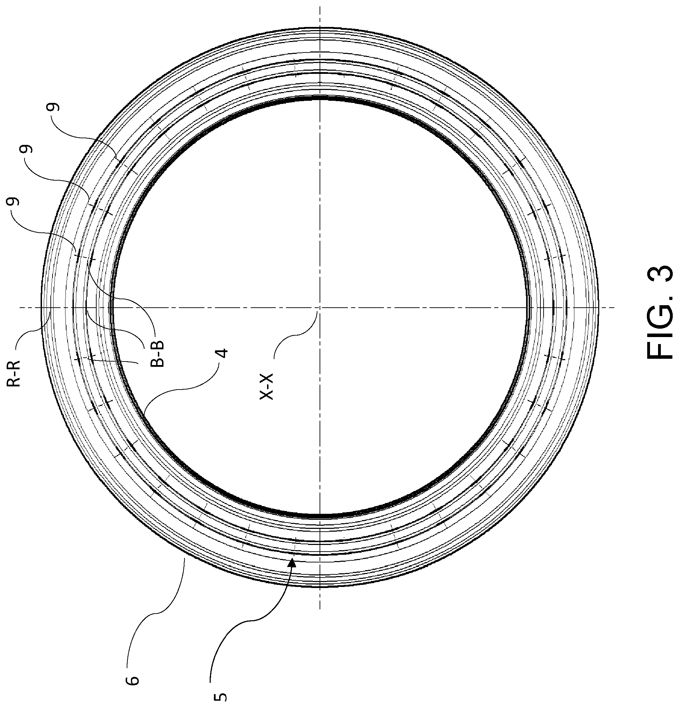

- figure 3 shows a front view of the primary gasket in figure 1;

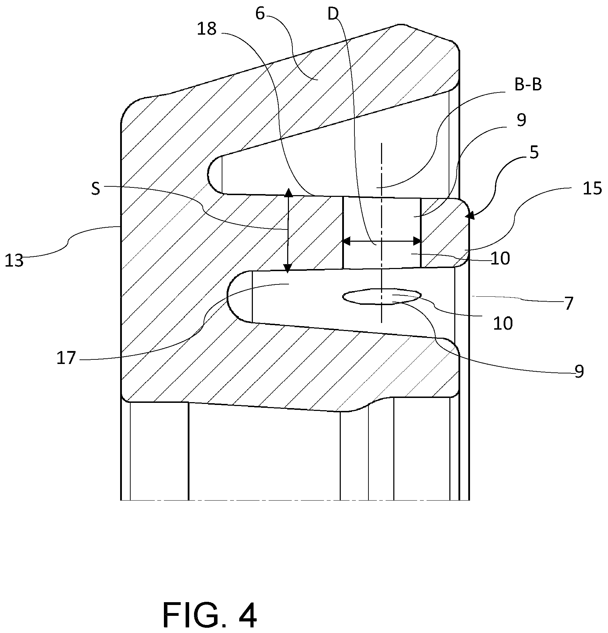

- figure 4 shows the gasket in figure 1 sectioned along a parallel plane and comprising the radial direction R-R in figure 3, in which the central lip is sectioned at the radial opening axis;

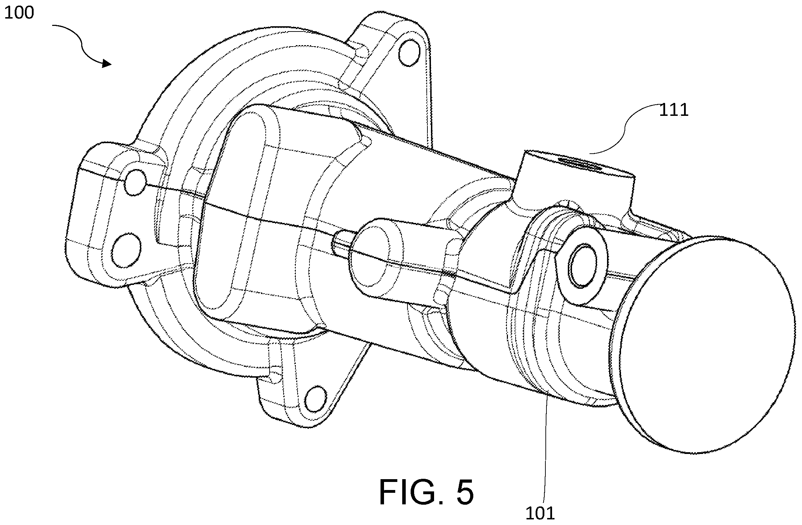

- figure 5 is an axonometric view of a cylinder assembly according to the present invention, e.g., a brake master cylinder actuatable by a lever to pressurize a fluid, or an actuator for BBW (Brake By Wire) systems governed by an electric motor to pressurize a brake fluid;

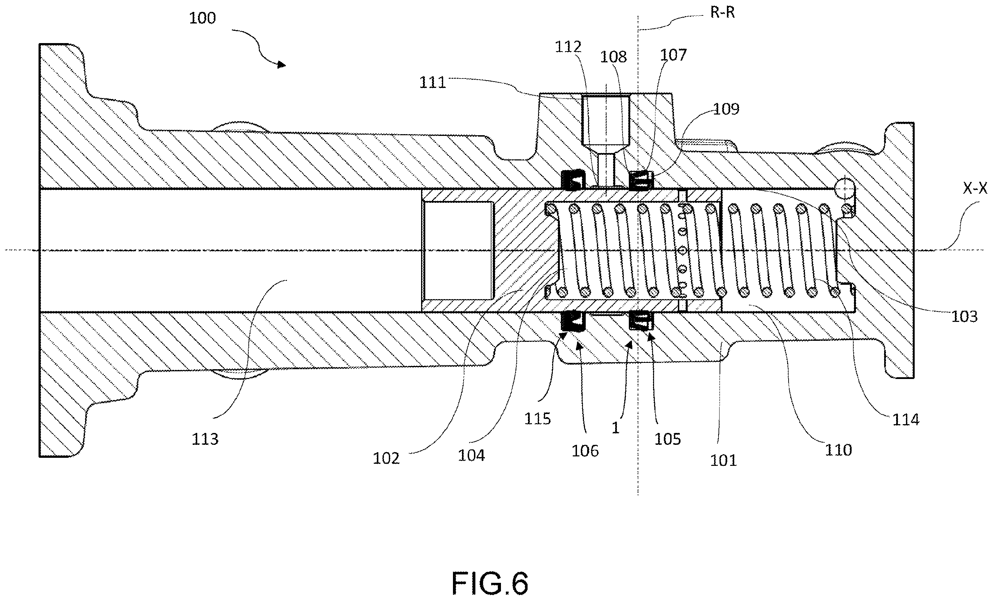

- figure 6 is a section view of the cylinder assembly in figure 5 sectioned along a section plane perpendicular to the axial direction X-X and the radial direction R-R, showing the float or piston slidingly accommodated in the float housing made in the sealed cylinder by virtue of the primary gasket in figure 1 and a secondary gasket.

### . Description of some preferred embodiments

**.** According to a general embodiment, a primary gasket for a cylinder assembly is indicated by reference numeral 1. Said cylinder assembly 100 comprises a cylinder 101 and a float 102 slidingly accommodated in a float housing 104 delimited by a cylinder wall 103 of said cylinder 101 for pressurizing a fluid. For example, said cylinder assembly 100 is a brake master cylinder or an electro-hydraulic actuator. According to an embodiment, said electro-hydraulic actuator is a linear actuator.

**.** The primary gasket 1 comprises an annular body 2, which extends circumferentially at least along a circumferential direction C-C about an axial direction X-X, where said primary gasket 1 defines a radial direction R-R perpendicular to said axial direction X-X and said circumferential direction C-C.

**.** Said annular body 2 is configured to be accommodated in a primary gasket housing 105 defined in said cylinder wall 103. The primary gasket housing 105 is delimited radially by an axial housing wall 107 and axially by a first radial housing wall 108 and a second radial housing wall 109, connected to said axial housing wall 107, forming an annular housing.

**.** Said annular body 2 comprises an inner lip 4, a central lip 5, an outer lip 6, and a back portion 3.

**.** The back portion 3 comprises a back abutment surface 13 configured to abut against the first radial housing wall 108 of said primary gasket housing 105.

**.** The inner lip 4, the central lip 5, and the outer lip 6 extend from the back portion 3 in the axial direction X-X spaced from one another in the radial direction R-R from the opposite side of the back abutment surface 13.

**.** The inner lip 4 is configured to form a preferably dynamic and static seal on the float 102.

**.** The outer lip 6 is configured to form a seal with said axial housing wall 107.

**.** The central lip 5 comprises an annular lip body 14, which extends axially between said back portion 3 and a central lip edge 15.

**.** The annular lip body 14 has a central lip thickness S along said radial direction R-R.

**.** The central lip edge 15 comprises at least one central lip abutment portion 7 configured to abut against the second radial wall 109.

**.** Advantageously, the central lip 5 comprises at least one radial opening 9. Said at least one radial opening 9 passes through the central lip thickness S defining a closed side opening profile 8 in said annular body 14.

**.** Due to the provision of the at least one radial opening 9 passing through the central lip thickness S, at least one fluid passage in the central lip 3 laterally delimited by the annular lip body 14 can be defined, which allows fluid passages even when the central lip is fully abutting with the central lip edge 15 thereof against the second radial housing wall.

**.** According to an embodiment, said central lip 5 comprises at least one side opening wall 10, where said at least one side opening wall 10 seamlessly delimits said at least one radial opening 9.

**.** According to an embodiment, said central lip 5 comprises a radially inner axial surface 17 and a radially outer axial surface 18, facing said inner lip 4 and said outer lip 6, respectively.

**.** According to an embodiment, each side opening wall 10 extends mainly radially from said radially inner axial surface 17 to said radially outer axial surface 18 avoiding the interference with said central lip edge 15 and defining said closed side opening profile 8.

**.** According to an embodiment, each radial opening 9 has a respective opening axis B-B, where each opening 9 is delimited seamlessly about the respective opening axis B-B by a respective opening side wall 10 of said annular lip body 14.

**.** According to an embodiment, each radial opening 9 has a respective opening diameter D.

**.** According to an embodiment, said closed side opening profile 8 is cylindrical or prismatic in shape.

**.** According to an embodiment, said closed side opening profile 8 is defined by a side opening wall 10 of said annular lip body 14, which extends at least radially from said central lip thickness S, where said respective side opening wall 10 has a cylindrical extension about said opening axis B-B or comprises a plurality of side walls laterally delimiting a hollow prism.

**.** According to an embodiment, said opening diameter D is at least equal to said central lip thickness S.

**.** According to an embodiment, each opening axis B-B is axially spaced apart from said central lip edge 15 by a distance less than twice the value of said opening diameter D.

**.** According to an embodiment, each opening axis B-B is axially spaced apart from said back abutment surface 13 by a distance equal to at least three times the value of said opening diameter D, preferably between four times and six times the value of said opening diameter D.

**.** Due to the provision of the at least one radial opening 9 and/or each radial opening close to said central lip edge 15 and/or said central lip abutment portion 7, a fluid passage through the third lip can be allowed while avoiding the third lip from bending.

**.** According to an embodiment, the central lip 5 comprises a plurality of said at least one radial opening 9, where said radial openings 9 are circumferentially spaced apart from one another on said central lip 5.

**.** According to an embodiment, each radial opening 9 is circumferentially spaced apart from one neighboring first radial opening of said radial openings 9 by a distance equal to at least the value of said diameter D, preferably equal to at least three times the value of said diameter D. According to an embodiment, the distance between two neighboring first openings is understood as the distance between the respective opening axes B-B.

**.** According to an embodiment, said radial openings 9 are evenly distributed circumferentially over said annular lip body 14.

**.** According to an embodiment, the number of said radial openings 9 is between 10 and 100, preferably between 20 and 50, preferably 30.

**.** According to an embodiment, said at least one central lip abutment portion 7 configured to abut against the second radial wall 109 extends seamlessly along the central lip edge 15 forming a continuous annular abutment portion.

**.** Due to the provision of a continuous abutment portion of the third lip, a uniform and stable abutment can be ensured, and by providing radial openings passing through the thickness of the third lip and arranged close to the central lip edge 15, the axial surface area of the central lip facing the fluid can be reduced, avoiding the central lip 5 from bending.

**.** According to an embodiment, said central lip edge 15 is an annular edge, avoiding comprising flat surfaces perpendicular to the axial direction. According to an embodiment, the central lip is tapered in the axial direction, e.g., close to the central lip edge 15.

**.** According to an embodiment, the inner lip 4 and the outer lip 6 have substantially the same axial size in the axial direction X-X, where the central lip 5 has a greater axial size in the axial direction X-X than the axial size of the outer lip and the inner lip, being less than the central lip thickness S.

**.** According to an embodiment, said annular body 2 is made of polymer material for gaskets, e.g., gasket rubber, preferably EPDM (Ethylene-Propylene Diene Monomer).

**.** The present invention also relates to a cylinder assembly 100 for a braking system.

**.** Said cylinder assembly 100 comprises a cylinder 101. Said cylinder 101 comprises a cylinder wall 103 internally delimiting a float housing 104. Said cylinder wall 103 delimits a pressure chamber fluidically connectable to a braking device. Said cylinder wall 103 delimits a primary gasket housing 105 and a secondary gasket housing 106. Said cylinder 101 defines a supply conduit 111 fluidically connectable to a reservoir and/or a fluid feeding valve, where said supply conduit 111 leads into a supply opening 112 on said cylinder wall 103 between said primary gasket housing 105 and said secondary gasket housing 106.

**.** Said cylinder assembly 100 comprises a float 102. The float 102 is slidingly accommodated in a sealing manner in the float housing 104 to pressurize a fluid in a pressure chamber 110 fluidically connectable to a braking device.

**.** Said cylinder assembly 100 comprises a primary gasket 1 according to any one of the previously described embodiments. The primary gasket 1 is accommodated in said primary gasket housing 105 with axial clearance between said first radial housing wall 108 and second said radial housing wall 109. When the primary gasket 1 abuts against said first radial housing wall 108, it forms a seal with said float 102 and said axial wall 107 of primary housing thus fluidically isolating the pressure chamber and the supply conduit 111. When the primary gasket 1 abuts against said second radial housing wall 109, it forms a seal with said float 102 avoiding the formation of a seal with the axial wall 107 of the primary housing to fluidically connect the supply conduit 111 and the pressure chamber 110 to increase the fluid pressure.

**.** Said cylinder assembly 100 comprises a secondary gasket 115 accommodated in the secondary gasket housing 106 to form a static and dynamic seal with said float and said cylinder wall 103.

**.** According to an embodiment, said secondary gasket 115 is a two-lip gasket.

**.** According to an embodiment, said cylinder assembly 100 is a brake master cylinder.

**.** According to an embodiment, said cylinder assembly 100 is an electro-hydraulic actuator. According to an embodiment, said electro-hydraulic actuator is an actuator for BBW (Brake By Wire) applications.

**.** According to an embodiment, said cylinder assembly 100 comprises an actuator motor 113.

**.** According to an embodiment, said cylinder assembly 100 comprises an elastic element 114 accommodated inside said cylinder 101, which constantly biases said float 102 in the opposite direction to a float advancement direction.

**.** According to an embodiment, the float 102 is axially movable between a resting configuration and at least one advanced configuration to pressurize a fluid, such as a brake fluid, in the pressure chamber.

**.** According to an embodiment, the primary gasket 1 is axially movable in the primary gasket housing between a fluid isolation configuration, in which the back portion 3 abuts against the first radial housing wall and the outer lip forms a seal with the axial wall and the inner lip forms a seal with the float 102, and a fluid communication configuration, in which the protuberances 10, 9 abut against the second radial housing wall and the outer lip is spaced apart from the axial wall and the inner lip forms a seal with the float 102.

**.** According to an embodiment, the float comprises a float body having a hollow portion delimited by a float wall, where the hollow portion is in fluid connection with the pressure chamber, where the float wall has a through opening. As long as said through opening is arranged between the primary gasket and the secondary gasket, the pressure chamber is in fluid communication with said supply conduit through said through opening. When said float is in said advanced configuration in which said through opening is axially advanced with respect to the primary gasket, the pressure chamber is fluidically isolated from the supply conduit by means of the primary gasket in the fluid isolation configuration, and the float pressurizes the fluid in the pressure chamber. When the fluid in the supply conduit exceeds the fluid pressure in the pressure chamber, the primary gasket switches to the fluid communication configuration, allowing the pressure in the pressure chamber to be increased.

### LIST OF REFERENCE SIGNS

- 1: primary gasket
- 2: annular body
- 3: back portion
- 4: inner lip
- 5: central lip
- 6: outer lip
- 7: central lip abutment portion
- 8: closed side opening profile
- 9: radial opening
- 10: opening side wall
- 13: back abutment surface
- 14: annular lip body
- 15: central lip edge
- 17: radially inner axial surface of central lip
- 18: radially outer axial surface of central lip

- 100: cylinder assembly
- 101: cylinder
- 102: float
- 103: cylinder wall
- 104: float housing
- 105: primary housing or primary gasket housing
- 106: secondary housing or secondary gasket housing
- 107: axial wall of primary housing
- 108: first radial wall of primary housing
- 109: second radial wall of primary housing
- 110: pressure chamber

- 111: supply conduit
- 112: supply opening
- 113: actuator motor
- 114: elastic element
- 115: secondary gasket
- X-X: axial direction
- R-R: radial direction
- C-C: circumferential direction
- 5 B-B: radial opening axis
- S: central lip thickness
- D: radial opening diameter

## Claims

1. A primary gasket (1) for a cylinder assembly (100), wherein said cylinder assembly (100) comprises a cylinder (101) and a float (102) slidingly housed in a float housing (104) delimited by a cylinder wall (103) of said cylinder (101) for pressurizing a fluid,
wherein the primary gasket (1) comprises an annular body (2), which extends circumferentially at least along a circumferential direction (C-C) about an axial direction (X-X), wherein said primary gasket (1) defines a radial direction (R-R) perpendicular to said axial direction (X-X) and said circumferential direction (C-C),
wherein said annular body (2) is configured to be accommodated in a primary gasket housing (105) defined in said cylinder wall (103), in which the primary gasket housing (105) is delimited radially by an axial housing wall (107) and axially by a first radial housing wall (108) and a second radial housing wall (109) connected to said axial housing wall (107),
wherein said annular body (2) comprises an inner lip (4), a central lip (5), an outer lip (6), and a back portion (3),
wherein the back portion (3) comprises a back abutment surface (13) configured to abut against the first radial housing wall (108) of said primary gasket housing (105),
wherein the inner lip (4), central lip (5), and outer lip (6) extend axially from the back portion (3), on the side opposite the back abutment surface (13), radially spaced apart from one another,
wherein the inner lip (4) is configured to form a seal with said float (102),
wherein the outer lip (6) is configured to form a seal with said axial housing wall (107),
wherein the central lip (5) comprises an annular lip body (14), which extends axially between said back portion (3) and a central lip edge (15), wherein the annular lip body (14) has a central lip thickness (S) along said radial direction (R-R), wherein the central lip edge (15) comprises at least one central lip abutment portion (7) configured to abut against the second radial wall (109),
wherein the central lip (5) comprises at least one radial opening (9),
**characterised in that** said at least one radial opening (9) passes through the central lip thickness (S) defining a closed side opening profile (8) in said annular body (14).

2. A primary gasket (1) according to the preceding claim,
wherein said central lip (5) comprises at least one side opening wall (10), wherein said at least one side opening wall (10) seamlessly delimits said at least one radial opening (9),
wherein said central lip (5) comprises a radially inner axial surface (17) and a radially outer axial surface (18) respectively facing said inner lip (4) and said outer lip (6),
wherein each side opening wall (10) extends predominantly and radially from said radially inner axial surface (17) to said radially outer axial surface (18) avoiding interfering with said central lip edge (15) and defining said closed opening side profile (8).

3. A primary gasket (1) according to any one of the preceding claims, comprising one or more of the following features or a combination thereof:
- wherein each radial opening (9) has a respective opening axis (B-B), wherein each opening (9) is delimited about the respective opening axis (B-B) seamlessly by a respective opening side wall (10) of said annular lip body (14); and/or
- wherein each radial opening (9) has a respective opening diameter (D); and/or
- wherein said closed side opening profile (8) has either a cylindrical or a prismatic shape; and/or
- wherein said closed side opening profile (8) is defined by a side opening wall (10) of said annular lip body (14), which extends at least radially of said central lip thickness (S), wherein said respective side opening wall (10) has a cylindrical extension about said opening axis (B-B) or comprises a plurality of side walls, which laterally delimit a hollow prism.

4. A primary gasket (1) according to the preceding claim, comprising one or more of the following features or a combination thereof:
- wherein each opening axis (B-B) is axially distanced from said central lip edge (15) by a distance less than twice the value of said opening diameter (D), and/or
- wherein each opening axis (B-B) is axially spaced from said back abutment surface (13) by a distance equal to at least three times the value of said opening diameter (D), preferably comprised between four times and six times the value of said opening diameter (D),
- wherein said opening diameter (D) is at least equal to said central lip thickness (S).

5. A primary gasket (1) according to any one of the preceding claims,
wherein the central lip (5) comprises a plurality of said at least one radial opening (9), wherein said radial openings (9) are circumferentially spaced apart from each other on said central lip (5).

6. A primary gasket (1) according to the preceding claim,
wherein each radial opening (9) is circumferentially spaced from one of its radial openings close tc said radial openings (9) by a distance equal to at least the value of said diameter (D), preferably equal to at least three times the value of said diameter (D).

7. A primary gasket (1) according to any one of claims from 5 to 6, comprising one or more of the following features or a combination thereof:
- wherein said radial openings (9) are uniformly distributed circumferentially over said annular lip body (14), and/or
- wherein there are from 10 to 100 of said radial openings (9), preferably from 20 to 50, preferably 30.

8. A primary gasket (1) according to any one of the preceding claims, wherein said at least one central lip abutment portion (7) configured abut against the second radial wall (109) extends seamlessly along the central lip edge (15) forming a continuous annular abutment portion.

9. A cylinder assembly (100) for a braking system, comprising
- a cylinder (101)
wherein said cylinder (101) comprises a cylinder wall (103), which internally delimits a floating housing (104),
wherein said cylinder wall (103) delimits a pressure chamber fluidically connectable to a braking device,
wherein said cylinder wall (103) delimits a primary gasket housing (105) and a secondary gasket housing (106), wherein the primary gasket housing (105) is radially delimited by an axial housing wall (107) and axially delimited by a first radial housing wall (108) and a second radial housing wall (109) connected to said axial housing wall (107),
wherein said cylinder (101) defines a supply conduit (111) fluidically connectable to a reservoir and/or fluid feeding valve, wherein said supply conduit (111) leads into a supply opening (112) on said cylinder wall (103) between said primary gasket housing (105) and said secondary gasket housing (106),
- a float (102),
wherein the float (102) is slidingly accommodated in a sealing manner in the float housing (104) to pressurize the fluid in a pressure chamber (110) fluidically connectable to a braking device,
- a primary gasket (1) according to any one of the preceding claims, wherein the primary gasket (1) is accommodated in said primary gasket housing (105) with an axial clearance between said first radial housing wall (108) and said second radial housing wall (109), wherein said primary gasket (1) when it abuts against said first radial housing wall (108) is configured to form a seal with said float (102), and said primary housing axial wall (107) fluidically isolating the pressure chamber and supply conduit (111), and wherein said primary gasket (1) when it abuts against said second radial wall (109) is configured to form a seal with said float (102) preventing the formation of a seal with the primary housing axial wall (107) abutting against said second radial housing wall (109) to fluidically connect the supply conduit (111) and the pressure chamber (110) to increase the fluid pressure in the pressure chamber,
- a secondary gasket (115) accommodated in the secondary gasket housing (106) to form a static and dynamic seal with said floating (102) and said cylinder wall (103).

10. A cylinder assembly (100) according to the preceding claim wherein said cylinder assembly (100) is a master cylinder or is an electrohydraulic actuator, preferably for BBW (Brake By Wire) applications.

## Patentansprüche

1. Primärdichtung (1) für eine Zylinderanordnung (100), wobei die Zylinderanordnung (100) einen Zylinder (101) und einen Schwimmer (102) umfasst, der gleitend in einem Schwimmergehäuse (104) aufgenommen ist, das durch eine Zylinderwand (103) des Zylinders (101) begrenzt ist, zum Druckbeaufschlagen eines Fluids,
wobei die Primärdichtung (1) einen ringförmigen Körper (2) umfasst, der sich in Umfangsrichtung zumindest entlang einer Umfangsrichtung (C-C) um eine axiale Richtung (X-X) erstreckt, wobei die Primärdichtung (1) eine radiale Richtung (R-R) senkrecht zur axialen Richtung (X-X) und zur Umfangsrichtung (C-C) definiert,
wobei der ringförmige Körper (2) ausgelegt ist, um in einem Primärdichtungsgehäuse (105) aufgenommen zu werden, das in der Zylinderwand (103) definiert ist, wobei das Primärdichtungsgehäuse (105) radial durch eine axiale Gehäusewand (107) und axial durch eine erste radiale Gehäusewand (108) und eine zweite radiale Gehäusewand (109), die mit der axialen Gehäusewand (107) verbunden sind, begrenzt ist,
wobei der ringförmige Körper (2) eine innere Lippe (4), eine mittlere Lippe (5), eine äußere Lippe (6) und einen hinteren Abschnitt (3) umfasst,
wobei der hintere Abschnitt (3) eine hintere Anlagefläche (13) umfasst, die ausgelegt ist, um an der ersten radialen Gehäusewand (108) des Primärdichtungsgehäuses (105) anzuliegen,
wobei sich die innere Lippe (4), die mittlere Lippe (5) und die äußere Lippe (6) axial von dem hinteren Abschnitt (3) auf der der hinteren Anlagefläche (13) gegenüberliegenden Seite radial voneinander beabstandet erstrecken,
wobei die innere Lippe (4) ausgelegt ist, um eine Dichtung mit dem Schwimmer (102) zu bilden, wobei die äußere Lippe (6) ausgelegt ist, um eine Dichtung mit der axialen Gehäusewand (107) zu bilden,
wobei die mittlere Lippe (5) einen ringförmigen Lippenkörper (14) umfasst, der sich axial zwischen dem hinteren Abschnitt (3) und einem mittleren Lippenrand (15) erstreckt, wobei der ringförmige Lippenkörper (14) eine mittlere Lippendicke (S) entlang der radialen Richtung (R-R) aufweist, wobei der mittlere Lippenrand (15) mindestens einen mittleren Lippenanlageabschnitt (7) umfasst, der ausgelegt ist, um an der zweiten radialen Wand (109) anzuliegen, wobei die mittlere Lippe (5) mindestens eine radiale Öffnung (9) umfasst,
**gekennzeichnet dadurch, dass**
die mindestens eine radiale Öffnung (9) durch die mittlere Lippendicke (S) hindurchgeht, wodurch ein geschlossenes Seitenöffnungsprofil (8) in dem ringförmigen Körper (14) definiert wird.

2. Primärdichtung (1) nach dem vorhergehenden Anspruch,
wobei die mittlere Lippe (5) mindestens eine Seitenöffnungswand (10) umfasst, wobei die mindestens eine Seitenöffnungswand (10) die mindestens eine radiale Öffnung (9) nahtlos begrenzt,
wobei die mittlere Lippe (5) eine radial innere axiale Fläche (17) und eine radial äußere axiale Fläche (18) umfasst, die jeweils der inneren Lippe (4) und der äußeren Lippe (6) zugewandt sind,
wobei sich jede Seitenöffnungswand (10) vorwiegend und radial von der radial inneren axialen Fläche (17) zu der radial äußeren axialen Fläche (18) erstreckt, wobei eine Beeinträchtigung des mittleren Lippenrands (15) vermieden wird und das geschlossene Öffnungsseitenprofil (8) definiert wird.

3. Primärdichtung (1) nach einem der vorhergehenden Ansprüche, umfassend eines oder mehrere der folgenden Merkmale oder eine Kombination davon:
∘ wobei jede radiale Öffnung (9) eine jeweilige Öffnungsachse (B-B) aufweist, wobei jede Öffnung (9) um die jeweilige Öffnungsachse (B-B) nahtlos durch eine jeweilige Öffnungsseitenwand (10) des ringförmigen Lippenkörpers (14) begrenzt ist;
∘ und/oder
∘ wobei jede radiale Öffnung (9) einen jeweiligen Öffnungsdurchmesser (D) aufweist; und/oder
∘ wobei das geschlossene Seitenöffnungsprofil (8) entweder eine zylindrische oder eine prismatische Form aufweist; und/oder
∘ wobei das geschlossene Seitenöffnungsprofil (8) durch eine Seitenöffnungswand (10) des ringförmigen Lippenkörpers (14) definiert ist, die sich zumindest radial zu der mittleren Lippendicke (S) erstreckt, wobei die jeweilige Seitenöffnungswand (10) eine zylindrische Erstreckung um die Öffnungsachse (B-B) aufweist oder eine Vielzahl von Seitenwänden umfasst, die ein Hohlprisma seitlich begrenzen·

4. Primärdichtung (1) nach dem vorhergehenden Anspruch, umfassend eines oder mehrere der folgenden Merkmale oder eine Kombination davon:
∘ wobei jede Öffnungsachse (B-B) von dem mittleren Lippenrand (15) um einen Abstand axial beabstandet ist, der kleiner als der zweifache Wert des Öffnungsdurchmessers (D) ist, und/oder
∘ wobei jede Öffnungsachse (B-B) von der hinteren Anlagefläche (13) um einen Abstand axial beabstandet ist, der mindestens gleich dem dreifachen Wert des Öffnungsdurchmessers (D) ist, vorzugsweise zwischen dem vierfachen und dem sechsfachen Wert des Öffnungsdurchmessers (D) liegt,
∘ wobei der Öffnungsdurchmesser (D) mindestens gleich der mittleren Lippendicke (S) ist.

5. Primärdichtung (1) nach einem der vorhergehenden Ansprüche,
wobei die mittlere Lippe (5) eine Vielzahl der mindestens einen radialen Öffnung (9) umfasst, wobei die radialen Öffnungen (9) in Umfangsrichtung voneinander auf der mittleren Lippe (5) beabstandet sind.

6. Primärdichtung (1) nach dem vorhergehenden Anspruch,
wobei jede radiale Öffnung (9) von einer ihrer radialen Öffnungen, die nahe an den radialen Öffnungen (9) liegt, in Umfangsrichtung um einen Abstand beabstandet ist, der mindestens gleich dem Wert des Durchmessers (D) ist, vorzugsweise mindestens gleich dem dreifachen Wert des Durchmessers (D) ist.

7. Primärdichtung (1) nach einem der Ansprüche 5 bis 6, umfassend eines oder mehrere der folgenden Merkmale oder eine Kombination davon:
∘ wobei die radialen Öffnungen (9) gleichmäßig in Umfangsrichtung über den ringförmigen Lippenkörper (14) verteilt sind, und/oder
∘ wobei von 10 bis 100 der radialen Öffnungen (9) vorhanden sind, vorzugsweise von 20 bis 50, vorzugsweise 30.

8. Primärdichtung (1) nach einem der vorhergehenden Ansprüche, wobei sich der mindestens eine mittlere Lippenanlageabschnitt (7), der ausgelegt ist, an der zweiten radialen Wand (109) anzuliegen, nahtlos entlang dem mittleren Lippenrand (15) erstreckt, wodurch ein durchgehender ringförmiger Anlageabschnitt gebildet wird.

9. Zylinderanordnung (100) für ein Bremssystem, umfassend
einen Zylinder (101) wobei der Zylinder (101) eine Zylinderwand (103) umfasst, die innen ein Schwimmergehäuse (104) begrenzt,
eine Druckkammer (110), die die Zylinderwand (103) begrenzt , die fluidisch mit einer Bremsvorrichtung verbindbar ist,
wobei die Zylinderwand (103) ein Primärdichtungsgehäuse (105) und ein Sekundärdichtungsgehäuse (106) begrenzt, wobei das Primärdichtungsgehäuse (105) radial durch eine axiale Gehäusewand (107) und axial durch eine erste radiale Gehäusewand (108) und eine zweite radiale Gehäusewand (109), die mit der axialen Gehäusewand (107) verbunden sind, begrenzt ist,
wobei der Zylinder (101) eine Zufuhrleitung (111) definiert, die fluidisch mit einem Behälter und/oder einem Fluidzufuhrventil verbindbar ist,
wobei die Zufuhrleitung (111) in eine Zufuhröffnung (112) an der Zylinderwand (103) zwischen dem Primärdichtungsgehäuse (105) und dem Sekundärdichtungsgehäuse (106) mündet,
einen Schwimmer (102),
wobei der Schwimmer (102) gleitend und abdichtend in dem Schwimmergehäuse (104) aufgenommen ist, um das Fluid in der Druckkammer (110), die fluidisch mit einer Bremsvorrichtung verbindbar ist, druckzubeaufschlagen,
- eine Primärdichtung (1) nach einem der vorhergehenden Ansprüche,
wobei die Primärdichtung (1) in dem Primärdichtungsgehäuse (105) mit einem axialen Spiel zwischen der ersten radialen Gehäusewand (108) und der zweiten radialen Gehäusewand (109) aufgenommen ist,
wobei die Primärdichtung (1), wenn sie an der ersten radialen Gehäusewand (108) anliegt, ausgelegt ist, um eine Dichtung mit dem Schwimmer (102) und der axialen Wand (107) des Primärgehäuses zu bilden, wodurch die Druckkammer und die Zufuhrleitung (111) fluidisch isoliert werden, und wobei die Primärdichtung (1), wenn sie an der zweiten radialen Wand (109) anliegt, ausgelegt ist, um eine Dichtung mit dem Schwimmer (102) zu bilden, wobei die Bildung einer Dichtung mit der axialen Wand (107) des Primärgehäuses, die an der zweiten radialen Gehäusewand (109) anliegt, verhindert wird, um die Zufuhrleitung (111) und die Druckkammer (110) fluidisch zu verbinden, um den Fluiddruck in der Druckkammer zu erhöhen,
eine Sekundärdichtung (115), die in dem Sekundärdichtungsgehäuse (106) aufgenommen ist, um eine statische und dynamische Dichtung mit dem Schwimmer (102) und der Zylinderwand (103) zu bilden.

10. Zylinderanordnung (100) nach dem vorhergehenden Anspruch,
wobei die Zylinderanordnung (100) ein Hauptzylinder oder ein Aktuator ist, vorzugsweise für elektrohydraulische BBW- (Brake By Wire) Anwendungen.

## Revendications

1. Joint primaire (1) pour un ensemble cylindre (100), dans lequel ledit ensemble cylindre (100) comprend un cylindre (101) et un flotteur (102) logé coulissant dans un logement de flotteur (104) délimité par une paroi de cylindre (103) dudit cylindre (101) pour mettre sous pression un fluide,
dans lequel le joint primaire (1) comprend un corps annulaire (2), qui s'étend circonférentiellement au moins le long d'une direction circonférentielle (C-C) autour d'une direction axiale (X-X), dans lequel ledit joint primaire (1) définit une direction radiale (R-R) perpendiculaire à ladite direction axiale (X-X) et à ladite direction circonférentielle (C-C),
dans lequel ledit corps annulaire (2) est configuré pour être reçu dans un logement de joint primaire (105) défini dans ladite paroi de cylindre (103), dans lequel le logement de joint primaire (105) est délimité radialement par une paroi de logement axiale (107) et axialement par une première paroi de logement radiale (108) et une seconde paroi de logement radiale (109) reliées à ladite paroi de logement axiale (107),
dans lequel ledit corps annulaire (2) comprend une lèvre intérieure (4), une lèvre centrale (5), une lèvre extérieure (6), et une portion arrière (3),
dans lequel la portion arrière (3) comprend une surface de butée arrière (13) configurée pour venir en butée contre la première paroi de logement radiale (108) dudit logement de joint primaire (105),
dans lequel la lèvre intérieure (4), la lèvre centrale (5), et la lèvre extérieure (6) s'étendent axialement depuis la portion arrière (3), sur le côté opposé à la surface de butée arrière (13), espacées radialement les unes des autres,
dans lequel la lèvre intérieure (4) est configurée pour former un joint d'étanchéité avec ledit flotteur (102),
dans lequel la lèvre extérieure (6) est configurée pour former un joint d'étanchéité avec ladite paroi de logement axiale (107),
dans lequel la lèvre centrale (5) comprend un corps de lèvre annulaire (14), qui s'étend axialement entre ladite portion arrière (3) et un bord de lèvre central (15), dans lequel le corps de lèvre annulaire (14) a une épaisseur de lèvre centrale (S) le long de ladite direction radiale (R-R), dans lequel le bord de lèvre central (15) comprend au moins une portion de butée de lèvre centrale (7) configurée pour venir en butée contre la seconde paroi radiale (109),
dans lequel la lèvre centrale (5) comprend au moins une ouverture radiale (9),
**caractérisé en ce que**
ladite au moins une ouverture radiale (9) traverse l'épaisseur de lèvre centrale (S) définissant un profil d'ouverture latéral fermé (8) dans ledit corps annulaire (14).

2. Joint primaire (1) selon la revendication précédente,
dans lequel ladite lèvre centrale (5) comprend au moins une paroi d'ouverture latérale (10), dans lequel ladite au moins une paroi d'ouverture latérale (10) délimite sans solution de continuité ladite au moins une ouverture radiale (9),
dans lequel ladite lèvre centrale (5) comprend une surface axiale radialement intérieure (17) et une surface axiale radialement extérieure (18) faisant respectivement face à ladite lèvre intérieure (4) et à ladite lèvre extérieure (6),
dans lequel chaque paroi d'ouverture latérale (10) s'étend de manière prédominante et radiale de ladite surface axiale radialement intérieure (17) à ladite surface axiale radialement extérieure (18) en évitant d'interférer avec ledit bord de lèvre central (15) et en définissant ledit profil latéral d'ouverture fermé (8).

3. Joint primaire (1) selon l'une quelconque des revendications précédentes, comprenant une ou plusieurs des caractéristiques suivantes ou une combinaison de celles-ci:
∘ dans lequel chaque ouverture radiale (9) a un axe d'ouverture respectif (B-B), dans lequel chaque ouverture (9) est délimitée autour de l'axe d'ouverture respectif (B-B) sans solution de continuité par une paroi latérale d'ouverture respective (10) dudit corps de lèvre annulaire (14);
∘ et/ou
∘ dans lequel chaque ouverture radiale (9) a un diamètre d'ouverture respectif (D); et/ou
∘ dans lequel ledit profil d'ouverture latéral fermé (8) a soit une forme cylindrique, soit une forme prismatique; et/ou
∘ dans lequel ledit profil d'ouverture latéral fermé (8) est défini par une paroi d'ouverture latérale (10) dudit corps de lèvre annulaire (14), qui s'étend au moins radialement par rapport à ladite épaisseur de lèvre centrale (S), dans lequel ladite paroi d'ouverture latérale respective (10) a une extension cylindrique autour dudit axe d'ouverture (B-B) ou comprend une pluralité de parois latérales, qui délimitent latéralement un prisme creux.

4. Joint primaire (1) selon la revendication précédente, comprenant une ou plusieurs des caractéristiques suivantes ou une combinaison de celles-ci:
∘ dans lequel chaque axe d'ouverture (B-B) est axialement distant dudit bord de lèvre central (15) d'une distance inférieure à deux fois la valeur dudit diamètre d'ouverture (D), et/ou
∘ dans lequel chaque axe d'ouverture (B-B) est axialement espacé de ladite surface de butée arrière (13) d'une distance égale à au moins trois fois la valeur dudit diamètre d'ouverture (D), de préférence comprise entre quatre fois et six fois la valeur dudit diamètre d'ouverture (D),
∘ dans lequel ledit diamètre d'ouverture (D) est au moins égal à ladite épaisseur de lèvre centrale (S).

5. Joint primaire (1) selon l'une quelconque des revendications précédentes,
dans lequel la lèvre centrale (5) comprend une pluralité de ladite au moins une ouverture radiale (9), dans lequel lesdites ouvertures radiales (9) sont circonférentiellement espacées les unes des autres sur ladite lèvre centrale (5).

6. Joint primaire (1) selon la revendication précédente,
dans lequel chaque ouverture radiale (9) est circonférentiellement espacée de l'une de ses ouvertures radiales proches desdites ouvertures radiales (9) d'une distance égale à au moins la valeur dudit diamètre (D), de préférence égale à au moins trois fois la valeur dudit diamètre (D).

7. Joint primaire (1) selon l'une quelconque des revendications 5 à 6, comprenant une ou plusieurs des caractéristiques suivantes ou une combinaison de celles-ci:
∘ dans lequel lesdites radiales ouvertures (9) sont uniformément réparties circonférentiellement sur ledit corps de lèvre annulaire (14), et/ou
∘ dans lequel il y a de 10 à 100 desdites ouvertures radiales (9), de préférence de 20 à 50, de préférence 30.

8. Joint primaire (1) selon l'une quelconque des revendications précédentes, dans lequel ladite au moins une portion de butée de lèvre centrale (7) configurée pour venir en butée contre la seconde paroi radiale (109) s'étend sans solution de continuité le long du bord de lèvre central (15) en formant une portion de butée annulaire continue.

9. Ensemble cylindre (100) pour un système de freinage, comprenant un cylindre (101) dans lequel ledit cylindre (101) comprend une paroi de cylindre (103), qui délimite intérieurement un logement de flotteur (104),
une chambre de pression (110) que ladite paroi de cylindre (103) délimite, pouvant être raccordée fluidiquement à un dispositif de freinage,
dans lequel ladite paroi de cylindre (103) délimite un logement de joint primaire (105) et un logement de joint secondaire (106), dans lequel le logement de joint primaire (105) est radialement délimité par une paroi de logement axiale (107) et axialement délimité par une première paroi de logement radiale (108) et une seconde paroi de logement radiale (109) reliées à ladite paroi de logement axiale (107), dans lequel ledit cylindre (101) définit un conduit d'alimentation (111) pouvant être raccordé fluidiquement à un réservoir et/ou une soupape d'alimentation en fluide,
dans lequel ledit conduit d'alimentation (111) débouche dans une ouverture d'alimentation (112) sur ladite paroi de cylindre (103) entre ledit logement de joint primaire (105) et ledit logement de joint secondaire (106),
un flotteur (102),
dans lequel le flotteur (102) est reçu coulissant de manière étanche dans le logement de flotteur (104) pour mettre sous pression le fluide dans la chambre de pression (110) pouvant être raccordée fluidiquement à un dispositif de freinage,
- un joint primaire (1) selon l'une quelconque des revendications précédentes,
dans lequel le joint primaire (1) est reçu dans ledit logement de joint primaire (105) avec un jeu axial entre ladite première paroi de logement radiale (108) et ladite seconde paroi de logement radiale (109),
dans lequel ledit joint primaire (1) lorsqu'il vient en butée contre ladite première paroi de logement radiale (108) est configuré pour former un joint d'étanchéité avec ledit flotteur (102), et ladite paroi axiale (107) de logement primaire isolant fluidiquement la chambre de pression et le conduit d'alimentation (111), et dans lequel ledit joint primaire (1) lorsqu'il vient en butée contre ladite seconde paroi radiale (109) est configuré pour former un joint d'étanchéité avec ledit flotteur (102) empêchant la formation d'un joint d'étanchéité avec la paroi axiale (107) de logement primaire venant en butée contre ladite seconde paroi de logement radiale (109) pour raccorder fluidiquement le conduit d'alimentation (111) et la chambre de pression (110) pour augmenter la pression de fluide dans la chambre de pression,
• un joint secondaire (115) reçu dans le logement de joint secondaire (106) pour former un joint d'étanchéité statique et dynamique avec ledit flotteur (102) et ladite paroi de cylindre (103).

10. Ensemble cylindre (100) selon la revendication précédente dans lequel ledit ensemble cylindre (100) est un maître-cylindre ou est un actionneur, de préférence pour des applications électrohydrauliques BBW (Brake By Wire).
